Europäisches Patentamt

European Patent Office

Office européen des brevets

(19)

(11) Publication number: 0 378 367
A2

(12) **EUROPEAN PATENT APPLICATION**

(21) Application number: 90300239.2

(22) Date of filing: 09.01.90

(51) Int. Cl.5: **G06F 15/40**

(30) Priority: 10.01.89 US 295631

(43) Date of publication of application:
18.07.90 Bulletin 90/29

(84) Designated Contracting States:
DE FR GB

(71) Applicant: **Hewlett-Packard Company**
**3000 Hanover Street**
**Palo Alto California 94304(US)**

(72) Inventor: **Lyngbaek, Peter**
**385 Foxborough Drive**
**Mountain View, California 94041(US)**
Inventor: **Wilkinson, Kevin**
**1158 Domegranate Court**
**Sunnyvale, California 94087(US)**

(74) Representative: **Colgan, Stephen James et al**
**CARPMAELS & RANSFORD 43 Bloomsbury**
**Square**
**London WC1A 2RA(GB)**

(54) Functional database system.

(57) A functional database system accessible by means of functional expressions. A functional expression in a database is evaluated by compiling the expression into a relational algebra expression in terms of an extended relational algebra and evaluating the compiled expression by referring to data stored in the database. A function may be called during compilation or interpretation, and the compiler or interpreter may be called recursively as necessary to compile or evaluate the function. The extended relational algebra includes a database update operator, a foreign function operator and a sequence operator.

Fig. 1

## FUNCTIONAL DATABASE SYSTEM

## FIELD OF THE INVENTION

The present invention relates generally to computerized database systems, and more particularly to a functional database system accessible by means of functional expressions.

## SUMMARY OF THE INVENTION

In a functional database system according to the invention, all requests to the database system can be formulated in terms of functional expressions.

Briefly and in general terms, a method according to the invention of evaluating a functional expression in a database system comprises compiling the functional expression into a relational algebra expression in terms of an extended relational algebra and interpreting the relational algebra expression by reference to data stored in the database to obtain a value for the functional expression.

A function may be generated or called during compilation, and the compiler may be called recursively to evaluate such a function. Similarly, a function may be generated or called during interpretation, and again the compiler may be called recursively to evaluate this function. The interpreter may be called recursively in the event a relational algebra expression is developed during interpretation and must itself be interpreted.

The extended relational algebra includes, for example, a database update operator, a foreign function operator, and a sequence operator (a sequence operator prescribes the order in which operations are to be performed).

The interpreter may invoke a foreign function (a function not expressed in relational algebra).

A database system according to the invention includes storage means such as magnetic media and a computer memory system, interface means such as a communication system and a computer terminal, and a group of modules. The modules include an executive module for receiving a functional expression from a user through the interface means, a compiler module responsive to the executive to compile the functional expression into an relational algebra expression, an interpreter module responsive to the executive to interpret the relational algebra expression, and a database storage manager module responsive to the interpreter to perform a database operation according to the value obtained by the interpreter.

The system preferably includes an object manager module responsive to the interpreter to invoke a foreign function and a cache interface module responsive to the interpreter to manage retrieval and updating of stored data.

Other aspects and advantages of the present invention will become apparent from the following detailed description, taken in conjunction with the accompanying drawings, illustrating by way of example the principles of the invention.

## BRIEF DESCRIPTION OF THE DRAWINGS

FIGURE 1 is a flow chart illustrating a method of evaluating a functional expression according to the invention, and

FIG. 2 is a block diagram illustrating a database system according to the invention.

## DESCRIPTION OF A PREFERRED EMBODIMENT

As shown in the drawings for purposes of illustration, the invention is embodied in a database system in which all requests to the system can be presented as functional expressions.

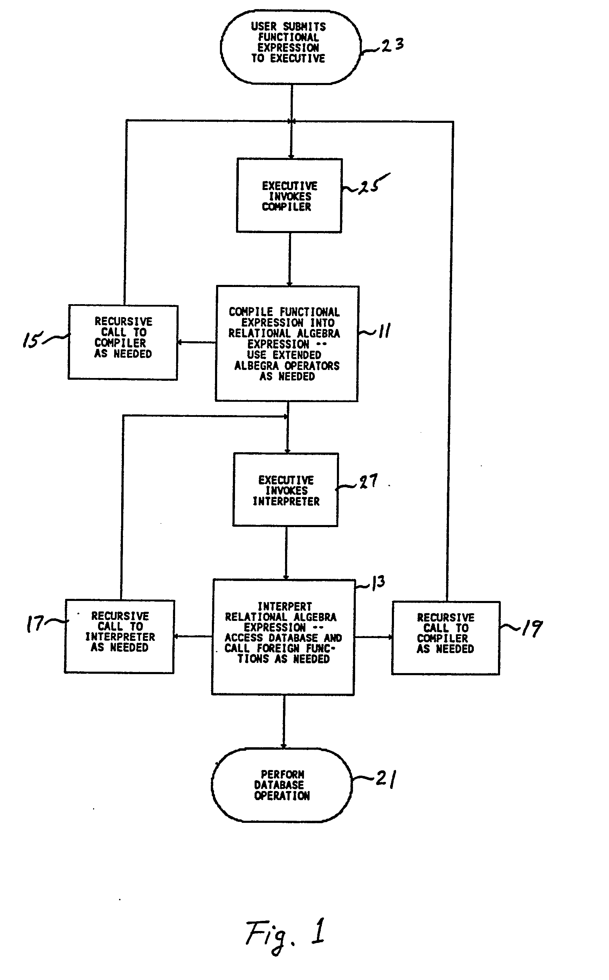

A method according to the invention of evaluating a functional expression in a database system comprises compiling the functional expression into a relational algebra expression in terms of an extended relational algebra as depicted in a block 11 of FIG. 1 and interpreting the relational algebra expression by reference to data stored in the database to obtain a value for the functional expression as depicted in a block 13.

Compiling (also referred to herein as "translating") preferably comprises a recursive compiler call as depicted in a block 15. Similarly, interpreting comprises a recursive interpreter call as depicted in a block 17 and a recursive compiler call as depicted in a block 19.

The extended relational algebra preferably includes a database update operator, a foreign function operator, and a sequence operator. The relational algebra expression is interpreted by reference to data obtained by invoking a foreign function.

A database operation according to the value obtained by the interpreter is preferably performed as depicted by a block 21.

Preferably a user (either a human operator or an application program) submits a request for a database operation (retrieval, update, data definition, access to system data, and the like) in the form of a functional expression to an executive (also preferred to herein as an "evaluator") as depicted by a block 23. The executive invokes the compiler as depicted by a block 25 connected to the block 23.

After the compilation has been performed, the executive invokes the interpreter as indicated by a block 27.

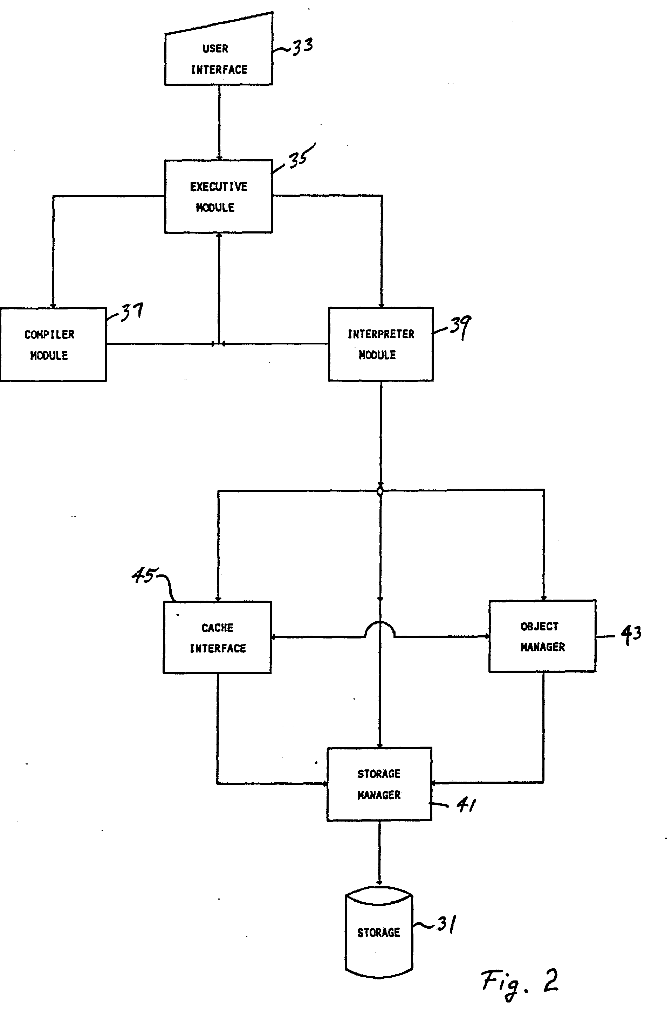

As shown in FIG. 2, a database system according to the invention includes storage means such as a disk drive 31 for storing information, interface means such as a terminal 33 for interfacing with a system user, an executive module 35 for receiving a functional expression from a user through the interface means 33, a compiler module 37 responsive to the executive 35 to compile the functional expression into an relational algebra expression in terms of an extended relational algebra, an interpreter module 39 responsive to the executive 35 to interpret the relational algebra expression by reference to data stored in the storage means 31 to obtain a value for the functional expression, and a database storage manager module 41 responsive to the interpreter 39 to perform a database operation according to the value obtained by the interpreter 39.

Preferably the system includes an object manager module 43 responsive to the interpreter 39 to invoke a foreign function. A foreign function is a function not expressed in relational algebra. The object manager 43 itself preferably comprises a plurality of foreign functions. Other such functions may be stored in the storage means 31.

The system preferably also includes a cache interface module 45 responsive to the interpreter to manage retrieval and updating of stored data. The cache interface 45 and the object manager 43 may communicate directly with each other and with the storage manager 41 as well as with the interpreter 39.

Invention Disclosures

Title:

An implementation technique for functional database systems.

Inventors:

Peter Lyngbaek, SAL, HP Labs,
Kevin Wilkinson, SAL, HP Labs.

Date:

December 2, 1988

Description of Invention:

We propose a process for evaluating general functional expressions over persistent objects. The process allows for requests to a database system to be expressed in terms of functional expressions. Specifically, database queries, database updates, data definition (including the definition of new database functions), and access to system data (i.e., meta-data) can be expressed in terms of functions. Previous descriptions of similar process only dealt with retrieval from the database (see Buneman82). This process has no such limitation; all database requests can be processed in this framework.

The process of evaluating database functional expressions has two steps:

Step 1: Compilation of a functional expression into an extended relational algebra expression. The conventional database relational algebra has been extended with a database update operator, foreign function operator (see Connors88), and a sequence operator. The mapping from functional expressions to extended relational expressions is supported by a system catalog also modeled by functions and objects. In order to obtain a value from the catalog, the compiler invokes the appropriate system function by calling the evaluator recursively.

The general process for translating functional expressions to relational algebra has been described elsewhere for retrieval operations (see Derrett88). The key to this invention is the set of the new relational operators. They permit the system to be implemented in terms of its own operations.

Step 2: Interpretation of the extended relational expression. This step is performed by accessing the database and invoking and executing foreign functions. The step accomplishes the request specified by the original functional expression.

The process is illustrated by the following block diagram:

```
              functional expression
                       |
                       |
                       v
              +-----------------+
    +------->| evaluator |<------+
    |        +-----------------+  |
    |          |        |         |
    |          |        |         |
    |          v        v         |
+-----------+      +---------------+
| compiler  |      | interpreter   |
+-----------+      +---------------+
                      |        |
                      |        |
                      v        v
                  database   foreign function
                  access     evaluation
```

Notice that the compiler and interpreter may both invoke the evaluator recursively.

The approach has the following advantages:

The system is self-describing. All meta-data (i.e., system functions) is retrieved and updated via user-accessible functions.

End-users and well as the system internally use the same mechanism to access and update system functions.

Genreral expressions that cannot be translated into the extended relational algebra can be represented by foreign functions. This give a degree of flexibility and extensibility.

The process allows performance optimization at various levels:

The values of frequently accessed functions may be cached by the evaluator.

The extended relational algebra representation for frequently used functions may be cached.

Data that is frequently obtained from the database by the interpreter may be cached.

References:

Buneman, P., Frankel, R. E. and Nikhil, R.
An Implementation Technique for Database Query Languages,
ACM Transaction on Database Systems, Vol. 7, No. 2, June 1982, pages 164-186.
Derrett, N. and Shan, M. C.

Rule-Based Query Optimization in Iris,
Proceedings of ACM Annual Computer Science Conference,
Louisville, Kentucky, February, 1989.
Connors, T. and Lyngbaek, P.
Providing Uninform Access to Heterogeneous Information Bases.
In, Lecture Notes in Computer Science 334, Advances in Object-Oriented Database Systems,
Klaus Dittrich (Ed.), Springer-Verlag, September, 1988.

# The Architecture of a Persistent Object System

*Peter Lyngbaek*
*Kevin Wilkinson*

*Hewlett-Packard Laboratories*
*1501 Page Mill Road*
*Palo Alto, CA 94304*

## Abstract

We describe an architecture for a database system based on an object/function model. The architecture efficiently supports the evaluation of functional expressions. The goal of the architecture is to provide a database system that is powerful enough to support the definition of procedural functions that implement the semantics of the data model. The architecture is currently being implemented to support the Iris Database System.

# 1 Introduction

Iris is an object-oriented database system supporting an object/function model [5]. The model supports high-level structural as well as behavioral abstractions. Queries are written as functional expressions and function values can be modified by database procedures. Extensibility is provided by allowing users to define new functions.

One of the long-term goals is to be able to describe and implement the Iris system in terms of its own functions and procedures [7]. To do this, we must find an appropriate set of primitive operations for object creation and function updating that can be used to define higher level operations. That way, new data model operations can be easily prototyped as ordinary database functions. This approach allows us to experiment with different semantics of, for example, multiple inheritance, versioning, and complex objects with little re-implementation effort. The nature of the Iris database language and its impact on the system architecture is the subject of this paper.

In an earlier Iris implementation [9], all the operations of the Iris Data Model, e.g., operations for object and function creation, were implemented as 'C' language subroutines and provided as separate Iris entry points. In that approach, it is not possible to support a database language in which complex database procedures are written from the primitive built-in system operations.

In addition, meta-data access was internally provided via a 'C' subroutine library that maintained a cache of the Iris system functions, i.e., the system catalog. These subroutines were not accessible as ordinary Iris functions and their use and control-flow was rather ad-hoc. Furthermore, the cached system functions were updated in a different manner than ordinary functions. Adding new system functions was tedious since they were supported via two different access mechanisms: one for users and one for Iris internally.

Since the essence of Iris is function application and updating, we are rearchitecting the Iris system around the single operation of invoking a function. Thus, our reimplementation consists of two tasks: we must define the capabilities of the Iris language that we can support and we must reimplement internal meta-data access and system operations as Iris functions.

The challenge is to find efficient solutions for both tasks. We must limit the features of the Iris database language to those that we know how to compile and optimize efficiently. We must also devise efficient execution strategies for system functions to limit the overhead and path length for those that are frequently invoked. We prefer the simplicity of a single function execution mechanism for all operations, both user-accessible and internal to the system, but it must perform efficiently.

The rest of this paper is organized as follows. Section 2 provides a brief overview of the Iris Data Model. In Section 3, the Iris database system interface is described, and Section 4 discusses the new system architecture and its constituents. Finally, in Section 5 some concluding remarks are given.

# 2 Overview of the Iris Data Model

The Iris Database System is based on a semantic data model that supports abstract data types. Its roots can be found in previous work on Daplex [12] and the Taxis language [11]. A number of recent data models, such as PDM [10] and Fugue [6], also share many similarities with the Iris Data Model The Iris data model contains three important constructs: *objects*, *types* and *functions*. These are briefly described below. A more complete description of the Iris Data Model and the Iris DBMS can be found in [7,5]. Throughout this section, we illustrate the Iris modeling constructs using the interactive OSQL database language.

## 2.1 Objects and Types

Objects in Iris represent entities and concepts from the application domain being modeled. Some objects such as the integers and the strings are treated as *literal objects*, being regarded as always available and printable. A *surrogate* object is represented by a system-generated *object identifier* or *oid*. Examples of surrogate objects include objects representing persons and departments.

Types have unique names and represent collections of objects that share common properties. For example, all the objects belonging to the Customer type have a Name and a Phone property. Objects serve as arguments to functions and may be returned as results of functions. Objects are constrained by their types to be operands for only those functions defined on the types.

Surrogate objects may belong to multiple types. In addition, objects may gain and lose types dynamically. For example, an object representing a given person may be created as an instance of the Employee type. Later it may lose the Employee type and acquire the type Retiree. When that happens, all the functions defined on Retiree become applicable to the object and the functions on Employee become inapplicable.

Types are organized in a type structure that supports generalization and specialization. A type may be declared to be a subtype of other types (its supertypes). The type graph models inheritance in Iris. A function defined on a given type is also defined on all the subtypes. In order to support stepwise refinement of functions, function names may be overloaded. That is, different functions defined on different types may be given identical names. When a function call is issued using an overloaded function name, a specific function is selected for invocation. Iris chooses the function that is defined on the most specific types of the actual arguments.

## 2.2 Functions

Attributes of objects, relationships among objects, and computations on objects are expressed in terms of functions. Functions are defined over types and they may be multi-valued and have side-effects. In Iris, the declaration of a function is separated from its implementation. This provides a degree of data independence.

A type can be characterized by the collection of functions defined on it. The Employee type might have the following functions defined over it:

```
JobTitle:  Employee → String

EmpDept:   Employee → Department

Manager:   Employee → Employee

SalHist:   Employee → Integer × Date

ChangeJob:  Employee × String × Department → Boolean
```

If Smith is working as a software engineer in the Toolkit Department reporting to Jones then:

```
JobTitle(Smith) = ''Software Engineer''

EmpDept(Smith) = ToolKit

Manager(Smith) = Jones
```

The SalHist function is multi-valued. It is also an example of a function with multiple result types. Each value consists of a pair of salary and date objects. The date indicates when the salary was changed. If Smith was hired on 3/1/87 with a monthly salary of $3000 and given a raise of $300 on 3/1/88 then:

```
SalHist(Smith) = [<3000, 3/1/87>, <3300, 3/1/88>]
```

The function ChangeJob has side-effects. It assigns a given employee to a given department and changes the job title as specified. This is an example of a function with multiple argument types. The promotion of Smith to Project Manger in the Applications Department can be reflected in the database by the following function invocation:

```
ChangeJob(Smith, ''Project Manager'', Applications)
```

In this invocation, Smith and Applications denote oids.

A new function is *declared* by specifying its name together with its argument and result types:

```
create function Manager( Employee ) = supervisor/Employee;
```

Before a function may be used, an *implementation* must be specified. This process is described in Section 2.4.

## 2.3 Database Updates and Queries

Properties of objects can be modified by changing the values of functions. For example, the operations:

```
set JobTitle(Smith) = ''MTS'';
add Salhist(Smith) = <3800, 1/1/89>;
```

will cause the JobTitle function to return the value "MTS" in a future invocation with the parameter Smith and add another salary and date pair to Smith's salary history. In addition to setting and adding function values, one or more values may be removed from the value-set of a multi-valued function. Not all functions are updatable.

The database can be queried by specifying a *predicate expression* on objects and function values. A query specifies a list of results using variables and function applications, a list of existentially quantified variables, and a predicate expression. The predicate may use variables, constants, nested function applications, and comparison operators. The execution of a query causes the variables to be instantiated. The result of a query is all the instantiated values of the variables and the results of the function applications specified in the result list. The results are returned as a stream. The following query retrieves all the dates on which Smith's salary was modified:

```
select d
for each Date d, Integer s
where SalHist( Smith ) = <s, d>;
```

and the query:

```
select Manager( Smith );
```

returns Smith's manager.

## 2.4 Function Implementation

So far, we have discussed the declaration of functions and their use in queries and updates. An important additional characteristic of a function is the specification of its behavior. Function values may be explicitly stored in the database or they may be computed. The method used is user-specified and is called the function's *implementation*. In general, functions can be used in queries regardless of how they are implemented. Iris supports three methods of function implementation: Stored, Derived, and Foreign.

### Stored Functions

The extension of a function may be explicitly stored in a table, i.e., corresponding argument and result values (the mapping of the function) are maintained in a single table. Several functions may be clustered in the same table in order to improve performance. Stored functions may be updated, that is, the mappings from argument values to result values can be explicitly specified (Section 2.3). The actions of retrieval and updates are implicitly defined in terms of relational operations on the tables. A formal treatment of the mapping of Iris functions to relational tables can be found in [8].

### Derived Functions

A function may be computed from other functions that are either stored, derived or foreign. Derived functions are intensionally defined by Iris database language expressions (Section 2.3). Derived functions support associative access to sets of objects and can be optimized by the Iris Query Translator. Unlike the Exodus approach [1], it is not our intention to make the Iris database language a general-purpose programming language. The goal is to provide a database language that is powerful enough to support the definition of procedural functions that implement most of

8

the operations of the data model. Foreign functions, described below, achieve the full generality of a general-purpose programming language.

A derived function defined by a query over stored functions only can be thought of as a view of the stored data. The update semantics of such a function are not always well-defined. For example, if the derivation expression of a given function requires joining several tables, the function cannot be directly updated. However, the actions of updates are implicitly defined by Iris in those cases where it can solve the "view update" problem. Functions that are defined as inverses of stored functions are examples of updatable derived functions. In other cases, the update semantics may be explicitly specified as part of the function definition.

A function defined by a sequence of update statements can be thought of as a database procedure. Such a function has side-effects and cannot be updated.

### Foreign Functions

A foreign function is defined in terms of a program written in some general-purpose programming language and compiled outside of Iris. The object code is stored in the Iris database. When the foreign function is invoked, the program is dynamically loaded and executed. Foreign functions provide flexibility and extensibility. Since the Iris database language is not computationally complete, there are certain functionalities that cannot be expressed as derived functions. Foreign functions provide a mechanism for incorporating such functionalities into the system. Furthermore, existing programs can easily be integrated with Iris through the foreign function mechanism.

Foreign functions cannot be optimized by the Iris system. However, their usage in queries can potentially be optimized.

Foreign functions and the mechanisms with which they are supported in Iris are described in [2].

## 2.5  Iris System Objects

In Iris types and functions are also objects. They are instances of the system types Type and Function, respectively. The Iris system types and their subtype/supertype relationships are illustrated in Figure 1. Like ordinary user-defined types, system types have functions defined on them. The system functions are implemented as stored, derived, or foreign functions and they may have side-effects. The collection of system types and functions model the Iris meta-data. This approach allows the meta-data to be modeled in the Iris Data Model.

System functions without side-effects retrieve meta-data. This includes such functions as those that return the name of a type or function, those that return the number of arguments and results of functions, one that returns the subtypes of a type, one that returns the declared types of the arguments and results of functions, and one that retrieves the compiled representation of a function.

The Iris system functions that have side-effects are called *system procedures*. They implement the operations of the data model such as creating an object or a type, declaring a function, implementing a function, changing the value of a function, and querying the database.

# 3   Iris Kernel Interface

## 3.1   Functionality

The Iris kernel is a program that implements the Iris data model. It is accessed via a single entry point, iris_eval, that serves as a function evaluator, or more generally, an expression tree evaluator. Each node in an Iris expression tree is self-identifying and consists of a header and some data fields. The header defines the node type.[1] The possible node types are: object identifier, variable, function call and one node type for each literal type (i.e. *integer, real, boolean, string, binary, bag, list*).

Kernel requests are formatted in terms of expression trees. All user and system functions are invoked via function calls (including such basic functions as comparison or equality checking).

---

[1]This is a distinct notion from an object type. Node types simply identify interface data structures.

```
                                    Object
                                      |
                                      |
                    ---------------------------------------
                                      |                   |
                                   Surrogate           Literal
                                      |
                                      |
                    ---------------------------
                            |                 |
                      UserTypeObject     SystemTypeObject
                         |   |   |            |
                      (user-defined types)    |
                                              |
                                              |
                                              |
                ----------------------------------------------------------
                    |       |         |     |        |          |         |
                   Type  Function   ArgRes  |   UnVersioned  StorageObject Transient
                    |       |         |     |        |          |         |
                    |       .         |     |        |          |         |
                 UserType   |         -----------            ---------     |
                    |       |         |         |            |       |     |
                    |       |      Version   Generic       Table   Index   |
                    |       |                                              |
                    |       |                                              |
                ---------------------            -------------------------
                    |        |       |           |       |        |      |
              UserFunction Update Updateable    Xact  Session  Savept  Scan



                                   Literal
                                      |
                                      |
                    ----------------------------------------
                            |                       |
                       Aggregate               LiteralAtom
                            |          .            |
                            |                       |
                    -----------         ---------------------------------
                        |     |         |       |        |       |      |
                      List   Bag     Integer  Real   Boolean  String Binary
```

Figure 1: Iris System Types

Currently, the root of an expression tree passed to the kernel must be a function call. The process of evaluating the function arguments and invoking the function is described in the next section.

The results of an Iris kernel call are also expression trees. However, a result expression tree consists entirely of constant nodes (i.e., literals or oids). The content and structure of the result tree depend on the function specified by the input expression tree. For example, invocation of the ObjCreate system procedure (create an object) would return an expression tree consisting of a single node, an object identifier. However, invoking a multi-valued function or a function with more than one result type returns a bag or a list, respectively. For example, the Select system procedure (find a collection of objects) returns a bag of objects.

Each Iris kernel request specifies a result buffer and an error buffer. The error buffer is used to record errors encountered during the processing of the request. The result buffer is filled with the results of the request. If the result buffer is too small to contain the entire result object, as much of the result is returned as will fit in the buffer. It is the client's responsibility to ensure that enough space exists.

In some cases, the size of the result is unpredictable. Then, the ScanOpen system procedure can be used to create a scan over the result objects. The argument to ScanOpen is simply the original request expression tree.

It is expected that opening a scan will be a frequent operation for the client. Thus, as a convenience, the kernel provides the additional entry points iris_open, iris_next, iris_close. These provide the same functionality as the Iris system procedures ScanOpen, ScanNext, ScanClose, respectively.

In addition to the entry points, a number of utility operations are provided to simplify the task of manipulating expression trees. For example, there are utility operations to return the type of a node, to print a node, and to copy a node.

The Iris kernel may run either as a stand-alone server process or it may be linked directly with the client process. In the non-serverized mode, the kernel and client execute in the same address space. Thus, the kernel may be vulnerable to bugs or mischief in the client if there is no hardware support for protecting the kernel private data. However, there may be performance advantages to running in this mode. So, it is supported but clients who use it must be trusted. In any case, there is one copy of the Iris kernel per client. Concurrency control is accomplished via shared memory among the copies of the Iris kernel.

The functionality of the Iris kernel may be compared to LISP, another function evaluator. In LISP, function arguments are all considered *s-expressions* and, unless *quoted*, are evaluated before invoking the function. The evaluation process serves to make all arguments simple and to bind values to variables.

Iris does not maintain a symbol table for variables between requests. Thus, if the root of an expression tree is a function call, none of the arguments may be a variable since there is no way to bind the variable to a value. Like LISP, Iris evaluates the function call arguments and binds each argument to a value. However, since arguments are typed, there is no need for a quote function. In particular, if an argument is declared as an expression, the compiler does not attempt to evaluate it but merely passes the expression tree to the function. For example, the predicate argument to the system function Select is defined as an expression.

# 4 Iris Kernel Architecture

The Iris kernel operates as a server in an infinite loop of: *accept request, execute request, send reply*. The execution phase consists of two steps: compile and interpret. The kernel request is in the form of a functional expression tree. The interpreter operates over relational algebra trees (actually, extended relational algebra trees). Thus, the compiler must translate functional trees into relational algebra trees. The interpreter traverses the relational algebra tree to produce the results.

The kernel is organized as a collection of software modules. They are layered as illustrated in Figure 2. The top-level module, EX (the Executive), implements the kernel entry points and the basic server loop. For each request, it calls the query translator, QT, to construct a relational

Figure 2: Iris Kernel Architecture

algebra tree for the request [3]. It then passes the relational algebra tree to the query interpreter, QI, to yield the results.

Mars is the Iris Storage Manager. It provides data sharing, transaction management and access to stored tables. B-tree indices may be defined over tables. Mars provides primitives to insert, delete and update tuples in tables and to associatively retrieve tuples from a table using a predicate expression. Mars uses a shared memory buffer among the different processes for concurrency control.

The Object Manager, OM, implements some of the Iris system procedures as foreign functions (as discussed later). The Cache Interface, CI, is an intermediate layer between the kernel and Mars. It provides prefetching and cache management for data retrieval and data updates between the kernel and Mars. The direct connections from QI and OM to Mars signify that some data definition commands and transaction control commands bypass the cache interface.

The remainder of this section describes the Query Translator and Query Interpreter modules in more detail. We also discuss meta-data access and the facilities of the Object Manager.

## 4.1 Query Translator

A request to the Iris kernel must be formatted as an Iris functional expression tree, or *F-Tree*. The nodes of an expression tree include function calls, variables, and literal nodes.

The query translation process consists of three main steps. First, the F-Tree is converted to a canonical form. This involves a series of tree transformations that are done to simplify subsequent transformations. For example, nested function calls are unnested by introducing auxiliary variables. The second step converts the canonical F-Tree to an extended relational algebra tree known as an *R-Tree*. This is a mechanical process in which function calls are replaced by their implementations (which are, themselves, R-Trees). For example, comparison function calls (e.g. equal, not-equal, less-than, etc.) are converted to relational algebra selection operators. The logical function, *AND*, is converted to a cross-product operator.

The resulting R-Tree consists of nodes for the relational algebra operations of project, select and cross-product. To increase the functionality of the Query Interpreter, there are some additional nodes. A *temp-table* node creates and, optionally, sorts a temporary table. An *update* node modifies an existing table. A *sequence* node executes each of its subtrees in turn.

12

The leaves of an R-Tree actually generate the data that is processed by the other nodes. A leaf may be either a table node or a foreign function node. A table node retrieves the contents of a Mars table. A projection list and predicate can be associated with the table node to reduce the number of tuples retrieved. A foreign function node simply invokes a foreign function.

The semantics of the tree are that results of a child node are sent to the parent node for subsequent processing. For example, a project node above a table node would filter out columns returned by the project node. Joins are specified by placing a select node above a cross-product node to compare the columns of the underlying cross-product.[2]

The final, and most complex, step is to optimize the R-Tree. The optimizer is rule-based. Each rule consists of a test predicate and a transformation routine. The test predicate takes an R-Tree node as an argument and if the predicate evaluates to true, the transformation routine is invoked. The predicate might test the relative position of a node (e.g., select node above a project node) or the state of a node (e.g., cross-product node has only one input). The possible transformations include deleting the node, moving it above or below another node, or replacing the node with a new R-Tree fragment. As in [4], the system must be recompiled whenever the rules are modified.

Rules are organized into rule-sets which, together, accomplish a specific task. For example, one rule-set contains all rules concerned with simplifying constant expressions (e.g., constant propagation and folding). Optimization is accomplished by traversing the entire R-Tree for each rule-set. During the traversal, at a given node, any rule in the current rule set may be fired if its test predicate is true.

The optimization steps (i.e., rule-sets) can be roughly described as follows. There is an initial rule set that converts the R-Tree to a canonical form. The canonical form consists of a number of query blocks. A query block consists of a project node above a select node above a cross-product node (any one of these nodes is optional). A leaf of a query block may be either a table node, a foreign function node or another query block. A query block may be rooted by a temp-table node, an update node or a sequence node.

A second rule-set eliminates redundant joins. This has the effect of reducing the number of tables in a cross-product. A third rule set is concerned with simplifying expressions. A fourth rule set reorders the underlying tables in a cross-product node to reduce the execution time. A fifth rule set handles Storage Manager-specific optimizations, for example, finding project and select operations that can be performed by the Storage Manager.

The final (optimized) R-Tree is then sent to the Query Interpreter which processes the query and returns the result to the user. However, the R-Tree may not represent a query but may, instead, be the newly defined body of a derived function. In this case, the R-Tree is simply stored in the database system catalog for later retrieval when compiling queries that reference the derived function.

The Query Translator is flexible and can accommodate any optimization that can be expressed in terms of a predicate test on a node and a tree transformation. Of particular interest is the ability to optimize the usage of foreign functions. As a simple example, given a foreign function that computes simple arithmetic over two numbers, rules could be written to evaluate the result at compile time if the operands are constants.

## 4.2 Query Interpreter

The Query Interpreter module evaluates an R-Tree and produces a set of tuples that may be returned to the user or stored back into the database (for example, to update the results of a function). The Query Interpreter treats each node in the R-Tree as a *scan object*. Each node in the R-Tree has three associated operations: *open*, *get-next*, and *close*. When the Query Interpreter is passed an R-Tree, it simply calls the open operation for the root of the R-Tree, and then calls get-next until no more tuples are returned. Then, the close operation is called.

An open operation may call the Query Interpreter, recursively, to retrieve results from a sub-tree. For example, given a project node, the portion of the R-Tree below the project node represents

---

[2]Of course, they are rarely executed this way because the filter predicate is typically pushed down below the cross-product.

the source of the tuples for the project operation. Thus, an open operation on a project node must recursively open a scan on the sub-tree in order to get the tuples.

The get-next operation returns the next tuple in the scan. The leaf nodes are the data sources. A get-next operation on a table node results in a call to Mars to fetch the next tuple in the previously opened scan. Similarly, a get-next operation on a foreign function node will invoke the foreign function to generate the next tuple value.

The Query Interpreter is fully re-entrant. It can handle R-Trees of arbitrary complexity, not just the simple project - select - cross-product trees mentioned earlier. In particular, nested queries can easily be processed.

## 4.3  Iris Meta-data

In order to compile and execute functions, the Iris system needs access to a system catalog describing the meta-data. For example, given a type, Iris must be able to find all its subtypes. Given a functions, Iris must know the name of the function, the argument and result parameters (which are, themselves, system objects with their own descriptions), the function implementation, and whether the function is single-valued. For an arbitrary object, Iris must be able to determine all its types.

The Iris system catalog is maintained as a collection of database tables (currently about 15). These tables implement the extensions of system types and functions. This notion of modeling system meta-data in the system is similar to relational database managers in which the system meta-data is modeled as relations.

Since the system functions are frequently accessed together (i.e. get the name and arguments for a particular function), most of the functions for a particular type of object are clustered together into a single table. Meta-data for some objects is represented in several tables. For example, the R-Trees representing implementations of functions are stored in a separate table distinct from the rest of the function meta-data.

The semantics of the Iris system procedures can be implemented as updates to the system tables. Essentially, this is the job of the Iris Object Manager.

## 4.4  Object Manager

In the current version of Iris, the system procedures are written as foreign functions. This was originally done because there was no relational algebra node to update a table. Instead, the system procedures call the Storage Manager directly to update the system tables. As the number and complexity of the system procedures has increased, this solution becomes less attractive for several reasons. First, because the Storage Manager is called from many places in the Object Manager, it will be difficult to modify Iris to use a different Storage Manager. Making Iris independent of the storage subsystem is a long-term goal. Indeed, it should be possible to view the Storage Manager as just another foreign function.

A second problem with direct Mars calls is that the semantics of an operation are hidden inside the procedure. Thus, it is not possible to optimize the procedure. In addition, it means that Iris is not self-describing.

Thus, the next step is to reimplement the Iris system procedures in terms of Iris. An initial step along these lines has been taken. An *update* node a and *sequence* node have been added to the set of R-Tree nodes (extended relational algebra nodes). These nodes are currently used to modify user functions. The next step is to use the nodes to update the system tables. This implies there will be a collection of primitive update operations that modify the system tables. Higher level procedures could then be derived from these primitive procedures. The primitive procedures could themselves be implemented as foreign functions or derived as updates over system tables.

## 4.5  Example: Type Creation

In this section, to provide a better understanding of the Iris architecture, we describe the sequence of events in creating a new Iris type. First, the client must build a request expression tree for the kernel. In this case, the request tree is a single function call node. The call node contains an

14

identifier for the function to be called (either the name, TypeCreate, or its object identifier) and the argument list containing the type name and the supertypes of the type.

The Iris kernel is then invoked via the iris_eval entry point. The Executive immediately passes the expression tree to QT for compilation. QT first checks to see that the function arguments are the correct type. In particular, the arguments must be "simple", i.e. either an object identifier or literal. Currently, function nesting and variables are only supported for certain system functions. Type checking succeeds if the type of the actual argument matches or is a subtype of the type of the corresponding formal arguments. If the argument types are correct, QT retrieves the R-Tree implementation for the function and substitutes the actual arguments for the formal arguments.

Since this request was a simple function call, no further optimization of the R-Tree is required (since R-Trees are stored in a pre-optimized form). However, certain system functions, such as Select, require more complete optimization. This is also true for expression trees that involve multiple function calls.

QT returns the optimized R-Tree for the request back to the Executive. The Executive then passes the R-Tree to the Query Interpreter to extract the results. An R-Tree may consist of a number of query blocks. In our case, the R-Tree is a single foreign function node, which calls the foreign function that implements the Iris TypeCreate system procedure. Since the function is known to be single-valued, there is no need to open a scan on the result. Thus, the query interpreter simply invokes the foreign function and returns the result, the object identifier of the created type.

The foreign function that creates a new type performs the following actions. It first performs some sanity checks that the type name is unique and that the supertypes exist. This is done by calling the appropriate system functions for meta-data checking using iris_eval. It then calls Mars directly to update the system table containing the type meta-data. Finally, it creates a *typing function* for the new type. The typing function maintains the extension of the type. Typically, a typing function is used to determine if an object has a particular type, e.g. UserFunction(x) returns True if the object identified by x is a user function.

Notice that function creation is an Iris system procedure (FunctionCreate). Thus, Iris must call itself recursively. The TypeCreate function builds an expression tree to invoke FunctionCreate and calls iris_eval in order to create the typing function. If the function is successfully created, TypeCreate returns the object identifier of the new type object. Otherwise, the type object is deleted and an error is returned to the client.

## 4.6  Discussion

The previous example illustrates several aspects of the current Iris architecture. First, the Type-Create function is a sequence of steps that update some Iris system tables and then calls a foreign function (to create the typing function). Given the update and sequence nodes in an R-Tree, there seems to be no reason why the TypeCreate function could not be written as an Iris derived function rather than a foreign function. Update nodes would be used to modify the Iris system tables and a foreign function node would be used to invoke FunctionCreate. These steps would be ordered by the sequence node.

Second, we notice that the TypeCreate function is implemented in terms of the Function-Create function. Thus, function creation, is in some sense a more primitive procedure than type creation. Function creation, in turn, involves system table updates and perhaps calls to other Iris functions. Our goal is to identify the primitive operations needed to implement the Iris semantics and reimplement the current system in terms of those basic functions. This will result in many of the current system functions being reimplemented as derived functions.

## 5  Conclusions

We have proposed a new architecture for an object-oriented database system. The architecture provides a generalized function evaluator. The approach has the following advantages:

- Prototyping new model semantics and operations can be accomplished by writing procedural database functions with the desired functionality. These functions can be replaced by real programs, e.g., C programs, which make calls to the function evaluator and can be hand-optimized for better performance.

- The system catalog requires no special implementation. The structure of the dictionary can easily be changed by the addition or removal of functions. The content of the dictionary is modified by function updates - just like ordinary user data.

- The generalized function evaluation mechanism simplifies the system structure as it is used both for external user requests and for internal requests to the cached system dictionary.

The approach is currently being used to implement the Iris system.

# References

[1] C. M. Carey, D. J. DeWitt, J. E. Richardson, and E. J. Shekita. Object and File Management in the EXODUS Extensible Datbase System. In *Proceedings of the Twelth International Conference on Very Large Data Bases*, Kyoto, Japan, 1986.

[2] T. Connors and P. Lyngbaek. Providing Uninform Access to Heterogeneous Information Bases. In Klaus Dittrich, editor, *Lecture Notes in Computer Science 334, Advances in Object-Oriented Database Systems*, Springer-Verlag, September 1988.

[3] N. Derrett and M. C. Shan. Rule-Based Query Optimization in Iris. In *Proceedings of ACM Annual Computer Science Conference*, Louisville, Kentuchy, February 1989.

[4] D. J. Dewitt and G. Graefe. The EXODUS Optimizer Generator. In *Proceedings of ACM-SIGMOD International Conference on Management of Data*, pages 160–172, 1987.

[5] D. H. Fishman, D. Beech, H. P. Cate, E. C. Chow, T. Connors, J. W. Davis, N. Derrett, C. G. Hoch, W. Kent, P. Lyngbaek, B. Mahbod, M. A. Neimat, T. A. Ryan, and M. C. Shan. Iris: An Object-Oriented Database Management System. *ACM Transactions on Office Information Systems*, 5(1), January 1987.

[6] S. Heiler and S. Zdonik. Views, Data Abstraction, and Inheritance in the FUGUE Data Model. In Klaus Dittrich, editor, *Lecture Notes in Computer Science 334, Advances in Object-Oriented Database Systems*, Springer-Verlag, September 1988.

[7] P. Lyngbaek and W. Kent. A Data Modeling Methodology for the Design and Implementation of Information Systems. In *Proceedings of 1986 International Workshop on Object-Oriented Database Systems*, Pacific Grove, California, September 1986.

[8] P. Lyngbaek and V. Vianu. Mapping a Semantic Data Model to the Relational Model. In *Proceedings of ACM-SIGMOD International Conference on Management of Data*, San Francisco, California, May 1987.

[9] Peter Lyngbaek, Nigel Derrett, Dan Fishman, William Kent, and Thomas Ryan. Design and Implementation of the Iris Object Manager. In *Proceedings of A Workshop on Persistent Object Systems: Their Design, Implementation and Use*, Appin, Scotland, August 1987.

[10] F. Manola and U. Dayal. PDM: An Object-Oriented Data Model. In *Proceedings of 1986 International Workshop on Object-Oriented Database Systems*, Pacific Grove, California, September 1986.

[11] J. Mylopoulos, P. A. Bernstein, and H. K. T. Wong. A Language Facility for Designing Database-Intensive Applications. *ACM Transactions on Database Systems*, 5(2), June 1980.

[12] D. Shipman. The Functional Data Model and the Data Language DAPLEX. *ACM Transactions on Database Systems*, 6(1), September 1981.

From the foregoing it will be appreciated that the database system of the invention allows a user to interface with the system exclusively by means of functional expressions.

Although certain specific embodiments of the invention have been described and illustrated, the invention is not to be limited to the specific forms or arrangements of parts so described and illustrated, and various modifications and changes can be made without departing from the scope and spirit of the invention. Within the scope of the appended claims, therefore, the invention may be practiced otherwise than as specifically described and illustrated.

## Claims

1. A method of evaluating a functional expression in a database system, the method comprising:
compiling the functional expression into a relational algebra expression in terms of an extended relational algebra; and
interpreting the relational algebra expression by reference to data stored in the database to obtain a value for the functional expression.

2. A method according to claim 1 wherein compiling comprises a recursive compiler call.

3. A method according to claim 1 wherein the extended relational algebra includes a database update operator, a foreign function operator, and a sequence operator.

4. A method according to claim 1 wherein interpreting comprises a recursive interpreter call.

5. A method according to claim 1 wherein interpreting comprises a recursive compiler call.

6. A method according to claim 1 wherein the relational algebra expression is interpreted by reference to data obtained by invoking a foreign function.

7. A method according to claim 1 and further comprising performing a database operation according to the value obtained by theinterpreter.

8. A database system comprising:
storage means for storing information;
interface means for interfacing with a system user;
an executive module for receiving a functional expression from a user through the interface means;
a compiler module responsive to the executive to compile the functional expression into an relational algebra expression in terms of an extended relational algebra;
an interpreter module responsive to the executive to interpret the relational algebra expression by reference to data stored in the storage means to obtain a value for the functional expression; and
a database storage manager module responsive to the interpreter to perform a database operation according to the value obtained by the interpreter.

9. A system according to claim 8 wherein the extended relational algebra includes a database update operator, a foreign function operator, and a sequence operator.

10. A system according to claim 8 and further comprising an object manager module responsive to the interpreter to invoke a foreign function.

11. A system according to claim 10 wherein the object manager comprises a plurality of foreign functions.

12. A system according to claim 10 wherein the interpreter interprets the relational algebra expression according to data obtained by invoking a foreign function.

13. A system according to claim 8 and further comprising a cache interface module responsive to the interpreter to manage retrieval and updating of stored data.

Fig. 1

USER
INTERFACE ~33

EXECUTIVE
MODULE 35

COMPILER
MODULE 37

INTERPRETER
MODULE 39

45

CACHE
INTERFACE

OBJECT
MANAGER 43

STORAGE
MANAGER 41

STORAGE ~31

Fig. 2